# EUROPÄISCHE PATENTSCHRIFT

(11) **EP 2 652 277 B1**
(45) Veröffentlichungstag und Bekanntmachung des Hinweises auf die Patenterteilung: **26.04.2017**
(21) Anmeldenummer: 11804520.2
(22) Anmeldetag: 09.12.2011
(51) Int. Cl.: F01N 3/20

(54) **FLÜSSIGKEITSENTNAHMEMODUL ZUR ENTNAHME VON FLÜSSIGKEIT AUS EINEM FLÜSSIGKEITSTANK, FLÜSSIGKEITSTANK**
LIQUID REMOVAL MODULE FOR REMOVING LIQUID FROM A LIQUID TANK, AND LIQUID TANK
MODULE DE PRÉLÈVEMENT DE LIQUIDE POUR PRÉLEVER DU LIQUIDE DANS UN RÉSERVOIR DE LIQUIDE, RÉSERVOIR DE LIQUIDE

(30) Priorität: 14.12.2010 DE 102010063047
(43) Veröffentlichungstag der Anmeldung: 23.10.2013
(73) Patentinhaber: Robert Bosch GmbH, 70442 Stuttgart (DE)
(72) Erfinder: LANDES, Ewgenij, 71686 Remseck (DE)
(86) Internationale Anmeldenummer: PCT/EP2011/072350
(87) Internationale Veröffentlichungsnummer: WO 2012/080136

(56) Entgegenhaltungen:
- EP-A1- 1 925 354
- DE-A1- 4 417 923
- FR-A1- 2 915 185
- US-A- 5 049 271
- US-A- 5 795 468

## Beschreibung

Die Erfindung betrifft ein Flüssigkeitsentnahmemodul zur Entnahme von Flüssigkeit aus einem Flüssigkeitstank, insbesondere eines Abgasnachbehandlungssystems eines Kraftfahrzeugs, umfassend einen in und/oder an dem Flüssigkeitstank anordenbaren Grundkörper, der eine Flüssigkeitsentnahmeeinrichtung mit wenigstens einer dem Tankinnenraum zuordenbaren Entnahmeöffnung aufweist und wenigstens ein der Entnahmeöffnung zugeordnetes Filterelement trägt.

Ferner betrifft die Erfindung einen Flüssigkeitstank für ein Fahrzeug, insbesondere für ein Abgasnachbehandlungssystem eines Kraftfahrzeugs, mit wenigstens einer Wandung, die eine Tanköffnung aufweist, wobei in und/oder an dem Flüssigkeitstank ein Flüssigkeitsentnahmemodul zur Entnahme von Flüssigkeit aus dem Tank die Tanköffnung verschließend angeordnet ist.

### Stand der Technik

Flüssigkeitsentnahmemodule sowie Flüssigkeitstanks der eingangs genannten Art sind aus dem Stand der Technik bekannt.

Aus der DE 10 2006 027 487 A1 ist ein Flüssigkeitsentnahmemodul bekannt, das durch eine Tanköffnung eines Flüssigkeitstanks in den Tank einsetzbar ist und die Tanköffnung deckelartig verschließt. Das Flüssigkeitsentnahmemodul umfasst eine Flüssigkeitsentnahmeeinrichtung die eine dem Tankinnenraum zugeordnete Entnahmeöffnung umfasst, durch welche die in dem Tank befindliche Flüssigkeit entnehmbar ist. Zum Fördern der Flüssigkeit umfasst die Flüssigkeitsentnahmeeinrichtung außerdem eine in das Flüssigkeitsentnahmemodul integrierte Pumpe.

Weiterhin ist es bekannt, der Entnahmeöffnung ein Filterelement zuzuordnen, um insbesondere die Pumpe und Verbraucher der in dem Flüssigkeitstank befindlichen Flüssigkeit vor Schmutzpartikeln oder dergleichen zu schützen. Weiterhin ist es bekannt, das Filterelement an dem die Entnahmeöffnung aufweisenden Grundkörper anzuordnen, sodass das Flüssigkeitsentnahmemodul als kompakte Baueinheit darstellbar ist.

Die Offenlegungsschrift DE 44 17 923 A1 beschreibt ein Flüssigkeitsentnahmemodul zur Entnahme von Flüssigkeit aus einem Flüssigkeitstank, mit einem in dem Flüssigkeitstank angeordneten Grundkörper, der eine Flüssigkeitsentnahmeeinrichtung beziehungsweise eine Brennstoffpumpe mit wenigstens einer dem Tankinnenraum zuordenbaren Entnahmeöffnung aufweist und wenigstens ein der Entnahmeöffnung zugeordnetes Filterelement beziehungsweise Filtertuch trägt. Das Filterelement ist zumindest bereichsweise elastisch verformbar und derart angeordnet, dass es zumindest eine entgegen einer Entnahme-Strömungsöffnung ausgerichtete Wölbung aufweist. Die Offenlegungsschrift FR 2 915 185 A1 offenbart ein Flüssigkeitsentnahmemodul zur Entnahme von Flüssigkeit beziehungsweise einer Harnstofflösung aus einem Flüssigkeitstank, wobei in dem Flüssigkeitstank ein Heizelement zum Beheizen der Flüssigkeit angeordnet ist.

### Offenbarung der Erfindung

Das erfindungsgemäße Flüssigkeitsentnahmemodul hat gegenüber den bekannten Flüssigkeitsentnahmemodulen den Vorteil, dass seine Funktionsfähigkeit auch in kritischen Situationen, insbesondere bei niedrigem Füllstand des Flüssigkeitstanks und/oder bei niedrigen Temperaturen, gewährleistet wird. Das erfindungsgemäße Flüssigkeitsentnahmemodul zeichnet sich dadurch aus, dass das zumindest bereichsweise elastisch verformbare Filterelement derart ausgebildet ist, dass es zumindest bereichsweise entgegen der Entnahme-Strömungsrichtung gewölbt ist. Das Filterelement weist somit wenigstens eine, vorzugsweise mehrere Wölbungen auf, die entgegen der Entnahme-Strömungsrichtung ausgerichtet sind, sodass die Flüssigkeit, die durch die Entnahmeöffnung entnommen wird, die Wölbung des Filterelements entgegen der Wölbungsrichtung durchströmt. Mit anderen Worten ist die Wölbung des Filterelements in Entnahme-Strömungsrichtung gesehen konvex geformt. Durch die Wölbung und die elastische Verformbarkeit des Filterelements, insbesondere im Bereich der Wölbung, wird erreicht, dass wenn das Filterelement beispielsweise vollständig nicht oder teilweise nicht mit Flüssigkeit bedeckt wird, sich das Filterelement in Entnahme-Strömungsrichtung verformt, beziehungsweise dass die zuvor nach außen gerichtete Wölbung des Filterelements bis hin zu einer nach innen geformten, konkaven Wölbung in Entnahme-Strömungsrichtung gesehen verformt wird. Anstatt dass ein nicht bedeckter Filterelement wie im Stand der Technik ein weiteres Absaugen von Flüssigkeit durch Luftansaugung verhindert, erlaubt das erfindungsgemäße Flüssigkeitsentnahmemodul eine weitergehende Flüssigkeitsentnahme, die durch die Größe der Wölbung des Filterelements definierbar ist. Damit ist Entnahme von möglichst viel Restflüssigkeit aus dem Tank sichergestellt, was zu einer Steigerung des Tank-Nettovolumens führt. Unter Nettovolumen ist hier die Flüssigkeitsmenge gemeint, welche tatsächlich aus dem Tank entnommen werden kann. Diese ist meistens kleiner als das tatsächliche Tankvolumen und verkleinert sich zusätzlich durch eine nicht absaugbare Restmenge. So kann auch bei niedrigem Flüssigkeitsstand und bei extremen Fahrsituationen oder bei Berg- und Talfahrt die Zeit überbrückt werden, in welcher das Filterelement beziehungsweise -gewebe nicht durch Flüssigkeit bedeckt ist. Soweit nur ein Teil des Filterelements mit der Flüssigkeit im Tank einen Kontakt hat, kann die Flüssigkeit abgesaugt werden, weil das Filterelement die Flüssigkeit bei geringerem Unterdruck durchlässt als sich im Tank befindliche Luft bzw. Gase. Zusätzlich werden die Schmutzpartikel durch die Wölbung am Eindringen in das Filterelement/-gewebe gehindert, weil der Schmutz sich nicht zum Beispiel durch Sedimentation dauerhaft auf dem Filter ablagern kann. Darüber hinaus wird durch die Wölbung und das elastische Nachgeben die Gefahr der Beschädigung zum Beispiel durch Eis oder andere mechanische Belastungen ausgeschlossen oder zumindest erheblich reduziert. Durch die Wölbung wird die Filterfläche außerdem vergrößert und damit die Filterlebensdauer beziehungsweise -Sicherheitsreserve erhöht.

Erfindungsgemäß umfasst der Grundkörper zur Einbringung des Flüssigkeitsentnahmemoduls in den Flüssigkeitstank ein Flanschteil zum Verschließen einer Tanköffnung des Flüssigkeitstanks und ein in den Tankinnenraum hineinragendes Entnahmeteil. Der Grundkörper weist somit zwei Bereiche auf und ist gegebenenfalls entsprechend zweiteilig aufgebaut. Das Filterelement sowie die Entnahmeöffnung sind vorzugsweise an dem Entnahmeteil vorgesehen. Gemäß einer bevorzugten Ausführungsform ist die Entnahmeöffnung dem Tankboden zugewandt, während das Filterelement oberhalb der Entnahmeöffnung vorzugsweise derart angeordnet ist, dass es den die Entnahmeöffnung aufweisenden Bodenbereich des Flüssigkeitstanks von dem übrigen Flüssigkeitstank trennt.

Besonders bevorzugt weist das Entnahmeteil eine flächige, mehrere Öffnungen bildende Gitterstruktur auf, die insbesondere parallel zum Boden des Flüssigkeitstanks anordenbar ist. An der Gitterstruktur lässt sich das Filterelement auf einfache Art und Weise befestigen, sodass es sich entsprechend der Außenkontur des Entnahmeteils über den Boden des Flüssigkeitstanks erstreckt. Vorzugsweise ist das Filterelement auf der Oberseite der Gitterstruktur angeordnet, während die Entnahmeöffnung an der Unterseite der Gitterstruktur vorgesehen ist. Besonders bevorzugt wird die Entnahmeöffnung von der Gitterstruktur selbst gebildet, wobei ein einstückig mit der Gitterstruktur ausgebildeter Entnahme-Kanal durch die Gitterstruktur beziehungsweise das Entnahmeteil insbesondere bis zu dem Flanschteil und einer insbesondere daran angeordneten Fördereinrichtung führt. Falls das Filterelement sich nicht über hydrostatischen Druck der Flüssigkeit entlüften lässt, so ist die Anordnung der Entnahmeöffnung im oberen Teil des Filters von Vorteil, weil dadurch die Lüft aus dem Filter einfacher abgesaugt werden kann.

Vorzugsweise erstreckt sich das Filterelement über das Entnahmeteil hinweg und ist dabei über mindestens einer der durch die Gitterstruktur gebildeten Öffnungen, insbesondere über jeder der Öffnungen entgegen der Entnahme-Strömungsrichtung gewölbt ausgebildet. Durch Vorsehen jeweils einer Wölbung an einer der Öffnungen wird insgesamt das Reservevolumen, das durch das Flüssigkeitsentnahmemodul dem Tank entnommen werden kann, insbesondere wenn beispielsweise der Filter nicht durch Flüssigkeit bedeckt ist (bei geringem Flüssigkeitsstand und bei Schräglagen und/oder Beschleunigungskräften), entsprechend erhöht.

Um die jeweilige Wölbung zu bilden ist das Filterelement vorzugsweise mit dem Entnahmeteil bereichsweise oder umlaufend verschweißt oder umspritzt. So ist das Filterelement zweckmäßigerweise mit der Gitterstruktur derart verschweißt oder umspritzt, dass im Bereich der Öffnung das Filterelement in die entsprechende Richtung gewölbt ist. Durch die Wahl der Umspritzungsgeometrie oder der Schweißpunkte oder Linien an dem Filterelement lässt sich dabei auch die Vorspannkraft der Wölbung des Filterelement festlegen. Durch die Wahl der Anordnung der Umspritzung oder Schweißnähte oder Schweißpunkte wird bestimmt, wie viel Material des Filterelements flächenmäßig im Bereich der jeweiligen Öffnung liegen soll. Je mehr Material in dem Bereich liegt, desto stärker ist die Wölbung ausgebildet.

Erfindungsgemäß ist vorgesehen, dass das Filterelement ein Filtergewebe und einen Filterträger umfasst, wobei der Filterträger strukturgleich auf dem Entnahmeteil des Grundkörpers aufgebracht ist, wobei das Filterelement mit dem Filterträger zum Bilden der mindestens einen Wölbung umspritzt und/oder verschweißt und/oder verklemmt ist. So lassen sich beispielsweise die einen oder die mehreren Wölbungen des Filterelements bereits bei der Herstellung des Filterelements erstellen, indem das Filtergewebe entsprechend in dem Filterträger eingefasst ist. Hierdurch lässt sich die Montage des Flüssigkeitsentnahmemoduls vereinfachen. Das Filterelement kann dabei an Bestandteilen des Filterträgers oder auch zwischen dem Filterträger und dem Grundkörper des Entnahmeteils zum Bilden der mindestens einen Wölbung verklemmt und/oder verschweißt und/oder mit umspritzt werden.

Erfindungsgemäß sind der Filterträger und/oder das Entnahmeteil als insbesondere Kunststoff umspritztes Heizelement ausgebildet. Das Entnahmeteil des Grundkörpers übernimmt somit eine Doppelfunktion, zum einen spannt es das Filterelement auf, und zum anderen dient es als Heizelement zum Erwärmen und insbesondere zum Auftauen von gefrorener, in dem Flüssigkeitstank befindlicher Flüssigkeit. Das Filterelement kann somit direkt an dem Heizelement oder mittels des Filterträgers an dem Grundkörper angeordnet sein. Durch die Ausbildung als Heizelement wird insbesondere die Flüssigkeit im Entnahmebereich, also nahe zu der Entnahmeöffnung, im Bedarfsfall aufgetaut und kann dem Flüssigkeitstank entnommen werden, wobei hier die mindestens eine Wölbung des Filterelements ein Entnehmen von Flüssigkeit bereits dann erlaubt, wenn nur Flüssigkeit im Entnahmebereich aufgetaut ist und außerhalb des Flüssigkeitsentnahmemoduls noch nicht. Nimmt das Flüssige Volumen auf der der Entnahmeöffnung zugewandten Seite des Filterelements ab, so verformt sich die Wölbung in Richtung der Entnahmeöffnung beziehungsweise der Entnahme-Strömungsrichtung, sodass auch verhindert wird, dass keine Luft von außerhalb des Filters angesaugt wird. Das Heizelement ist vorzugsweise als ein kunststoffumspritzter Aluminiumkörper ausgebildet, dem insbesondere ein oder mehrere PTC-Heizelement zugeordnet sind.

Gemäß einer vorteilhaften Weiterbildung der Erfindung ist vorgesehen, dass das Entnahmeteil außermittig, insbesondere am Randbereich des Flanschteils angeordnet ist, und sich insbesondere im Wesentlichen senkrecht zu dem Flanschteil erstreckt. Durch die außermittige Anordnung des Entnahmeteils an dem Flanschteil wird gewährleistet, dass das Entnahmeteil und insbesondere die Entnahmeöffnung möglichst weit unten in dem Flüssigkeitstank beziehungsweise nahe zu dem Tankboden angeordnet wird. Vorzugsweise sind das Entnahmeteil und das Flanschteil dazu in ihrer Höhenlage versetzt zueinander angeordnet, sodass in dem Flüssigkeitstank eine seitliche Öffnung in einen für die Öffnung vorteilhaften Bereich der Seitenwandung des Flüssigkeitstanks ausgebildet werden kann, und das Entnahmeteil dennoch am Tankboden anordenbar ist. Natürlich ist es auch denkbar, Entnahmeteil und Flanschteil parallel zueinander anzuordnen und durch eine im Tankboden ausgebildete Tanköffnung in den Tankraum einzubringen.

Besonders bevorzugt umgibt das Filterelement den die Entnahmeöffnung aufweisenden Entnahmeteil des Grundkörpers. Das Filterelement ist somit nicht nur in einer Ebene, sondern vorzugsweise in mindestens zwei Ebenen, oberhalb und unterhalb der Entnahmeöffnung, angeordnet, sodass das Filterelement ein der Entnahmeöffnung zugeordnetes Volumen umgibt, sodass gegebenenfalls nur mehrstufig gefilterte Flüssigkeit in die Entnahmeöffnung gelangen kann. Sowohl auf der Ober- als auch auf der Unterseite können dabei ein oder mehrere Wölbungen des Filterelements vorgesehen sein.

Der erfindungsgemäße Flüssigkeitstank zeichnet sich durch die Ausbildung des Flüssigkeitsentnahmemoduls, wie es oben beschrieben wurde, aus. Es ergeben sich hierdurch die oben bereits beschriebenen Vorteile. Besonders bevorzugt sind zumindest das Flanschteil und die Wandung des Flüssigkeitstanks aus dem gleichen Material, insbesondere aus dem gleichen Kunststoff gefertigt, um ein einfaches und sicheres Verschweißen der beiden Elemente miteinander zu ermöglichen.

Im Folgenden soll die Erfindung anhand der Zeichnung näher erläutert werden. Dazu zeigen im Folgenden
- Figur 1: ein Flüssigkeitsentnahmemodul in einer perspektivischen Darstellung,
- Figur 2: eine vergrößerte Detailansicht des Flüssigkeitsentnahmemoduls in einer perspektivischen Darstellung,
- Figur 3: eine Schnittdarstellung des Flüssigkeitsentnahmemoduls,
- Figur 4: eine Unteransicht einer alternativen Ausführungsform des Flüssigkeitsentnahmemoduls,
- Figur 5: einen Flüssigkeitstank mit dem Flüssigkeitsentnahmemodul,
- Figur 6: eine Montageposition des Flüssigkeitstanks,
- Figur 7: ein Heizelement des Flüssigkeitsentnahmemoduls in einer perspektivischen Darstellung,
- Figur 8: eine Schnittdarstellung durch das Flüssigkeitsentnahmemodul gemäß einer vorteilhaften Weiterbildung,
- Figur 9: eine Weiterbildung des Flüssigkeitsentnahmemoduls in einer perspektivischen Darstellung und
- Figur 10: ein Flanschteil des Flüssigkeitsentnahmemoduls in einer perspektivischen Darstellung.

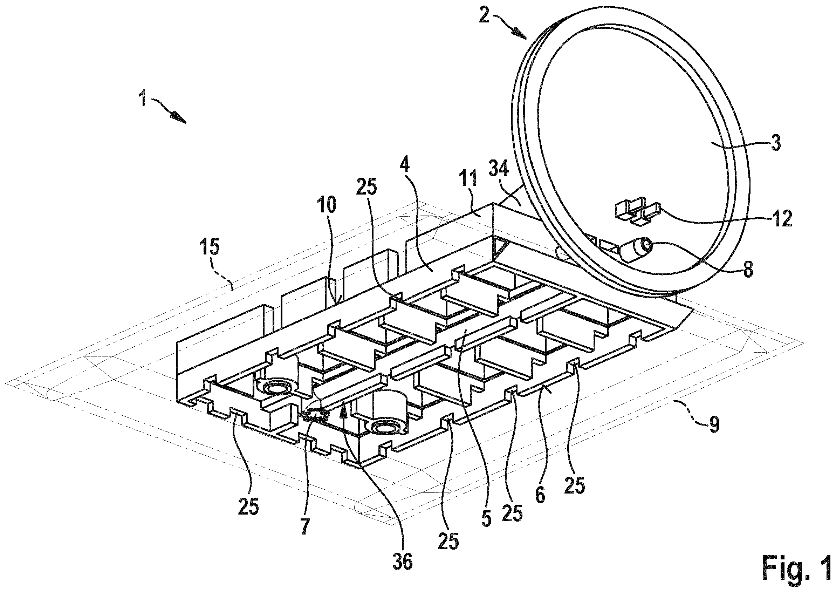

Figur 1 zeigt in einer perspektivischen Darstellung ein Flüssigkeitsentnahmemodul 1, das zum Einbau in einen Flüssigkeitstank eines Abgasnachbehandlungssystems eines Kraftfahrzeugs dient. Dazu umfasst das Flüssigkeitsentnahmemodul 1 einen Grundkörper 2, der ein Flanschteil 3 sowie ein Entnahmeteil 4 aufweist. Vorzugsweise ist der Grundkörper 2 aus hochdichtem Polyethylen beziehungsweise aus HDPE-Kunststoff gefertigt. Das Flanschteil 3 ist deckelartig ausgebildet und weist dazu eine kreisförmige Kontur auf. Das Entnahmeteil 4 weist eine flächige Gitterstruktur auf, die sich im Wesentlichen senkrecht zu dem Flanschteil 3 beziehungsweise parallel zu dessen Achse erstreckt. Das Flanschteil 3 und das Entnahmeteil 4 sind über eine Steckverbindung miteinander verbunden, können aber auch einstückig oder auf andere Art und Weise miteinander verbunden sein. Durch das Entnahmeteil 4 erstreckt sich außerdem ein Entnahmekanal 5, der in eine auf der Unterseite 6 angeordnete Entnahmeöffnung 7 mündet und anderendig in einen Entnahmeanschluss 8, der an der Außenseite des Flanschs 3 ausgebildet ist, übergeht. Die Entnahmeöffnung 7 ist vorliegend an dem dem Flansch 3 fernen Ende des Entnahmeteils 4 mittig angeordnet. Die Entnahmeöffnung 7 sowie der Entnahmekanal 5 sind einstückig durch das Entnahmeteil 4, das vorteilhafterweise als Kunststoffteil gefertigt ist, gebildet. Prinzipiell ist es denkbar, eine weitere oder mehrere weitere Entnahmeöffnungen vorzusehen, die in den gleichen Entnahmekanal 5 oder in weitere Entnahmekanäle, die durch das Entnahmeteil 4 beziehungsweise in den Grundkörper 2 führen, münden.

Das Entnahmeteil 4 ist weiterhin von einem Filterelement 9 umgeben, das das Entnahmeteil 4 voll umfänglich umfängt und seitlich über das Entnahmeteil 4 hinausragt. Die Entnahmeöffnung 7 liegt somit innerhalb des Filterelements 9. Auf der Oberseite 10 des Entnahmeteils 4 ist ein Heizelement 11 angeordnet, das einen kunststoffumspritzten Aluminiumgrundkörper aufweist. Das Heizelement 11 ist strukturgleich zu dem Entnahmeteil 4 ausgebildet, sodass das Heizelement 11 die gleiche, flächige Gitterstruktur aufweist, wie das Entnahmeteil 4, sodass die beiden fluchtend aufeinander anordenbar sind. In dem vorliegenden Ausführungsbeispiel liegt das Filterelement 9 mit einem Bereich zwischen dem Heizelement 11 und dem Entnahmeteil 4. Natürlich ist auch eine Ausführungsform denkbar, bei der das Filterelement 9 auch das Heizelement 11 mit umschließt. Das Heizelement 11 weist Anschlusskontakte 12 auf, die durch das Flanschteil 3 nach außen ragen, sodass das Heizelement 11 von außen mit zum Beispiel einem Stecker elektrisch kontaktierbar ist.

Der Entnahmekanal 8 und die Entnahmeöffnung 7 und gegebenenfalls an dem Flanschteil 3 angebrachte Fördereinrichtung bilden zusammen eine Flüssigkeitsentnahmeeinrichtung 36 des Flüssigkeitsentnahmemoduls 1.

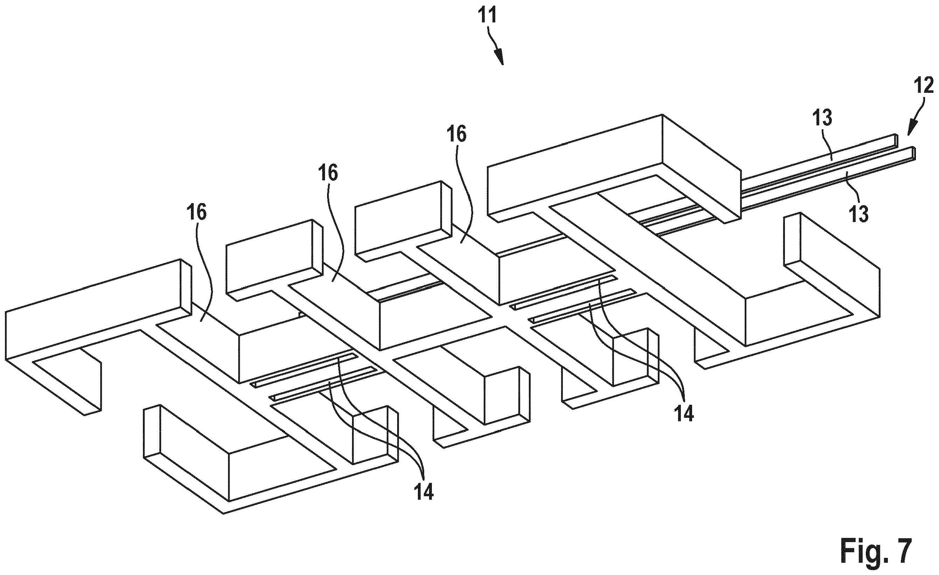

Figur 7 zeigt das Heizelement 11 in einer perspektivischen Darstellung. Die die Anschlusskontakte 12 bildenden Anschlussleitungen 13 werden bei der Fertigung ebenfalls mit dem Kunststoff umspritzt. Im mittleren Bereich sind mehrere PTC-Heizelemente 14 in Aufnahmetaschen der Kunststoffummantelung und/oder des Aluminiumgrundkörpers angeordnet, die elektrisch mit den Anschlussleitungen 13 verbunden sind. Werden die PTC-Heizelemente entsprechend bestromt, so heizen sie sich auf, wobei ihre Wärme von dem Aluminiumgrundkörper weitergeleitet und entsprechend verteilt wird.

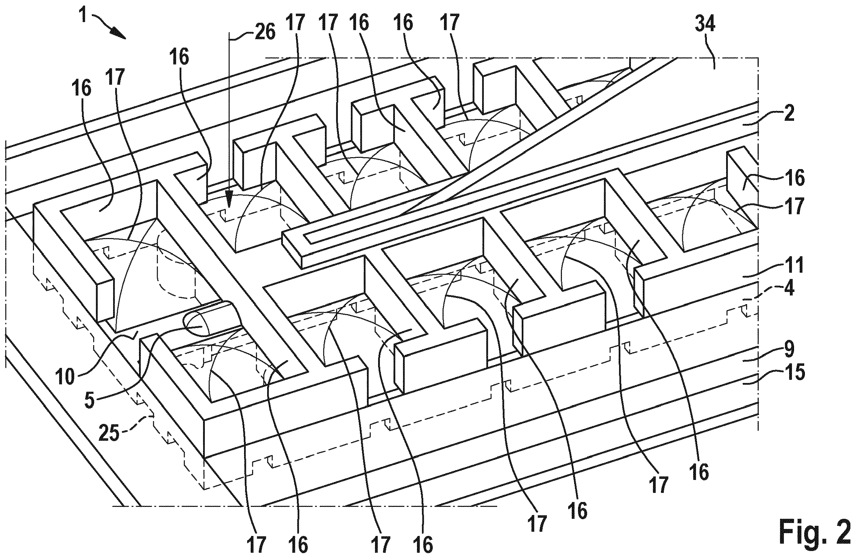

Figur 2 zeigt ein Flüssigkeitsentnahmemodul 1 in einer perspektivischen Draufsicht auf die Oberseite 10 des Entnahmeteils 4. Das Filterelement 9 besteht in dem vorliegenden Ausführungsbeispiel lediglich aus Filtergewebe 15, das elastisch verformbar ausgebildet ist. Die durch die Gitterstruktur des Heizelements 11 und des Entnahmeteils 4 gebildeten Öffnungen 16 werden von dem Filtergewebe 15 überdeckt, wobei im Bereich der jeweiligen Öffnung 16 das Filtergewebe 15 beziehungsweise Filterelement 9 eine Wölbung 17 aufweist. Die Wölbungen 17 weisen dabei von der Oberseite 10 des Entnahmeteils 4 weg. Zum Erzeugen der Wölbungen 17 ist das Filtergewebe 15 beziehungsweise Filterelement 9 an dem Entnahmeteil 4 verklebt oder umspritzt oder bevorzugt verschweißt. Ebenfalls ist es denkbar, das Filterelement 9 zwischen dem Heizelement 11 und dem Entnahmeteil 4 derart einzuklemmen, dass die Wölbungen 17 dauerhaft bestehen.

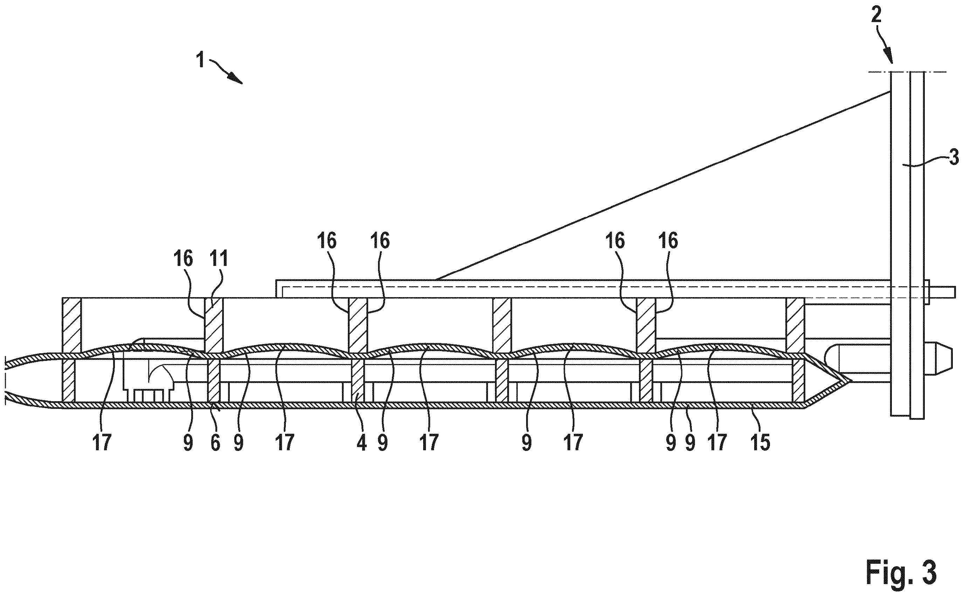

Figur 3 zeigt zur Verdeutlichung das Flüssigkeitsentnahmemodul 1 in einer Schnittdarstellung durch die Gitterstruktur. Hier sind die Wölbungen 17 im Bereich der jeweiligen Öffnung 16 deutlich zu erkennen. Durch die gleichstrukturierte Ausbildung des Heizelements 11 und des Entnahmeteils 4 bilden diese gemeinsam jeweils eine der Öffnungen 16. Gemäß einer alternativen Ausführungsform kann das Filterelement zusammen mit dem Heizelement 11 eine Vormontagegruppe bilden, derart, dass das Filterelement 9 an dem Heizelement 11 unter Ausbilden der Wölbungen 17 befestigt, insbesondere verklebt oder verschweißt ist. Anschließend muss das Heizelement 11 lediglich auf die Oberseite 10 des Entnahmeteils 4 aufgesetzt werden.

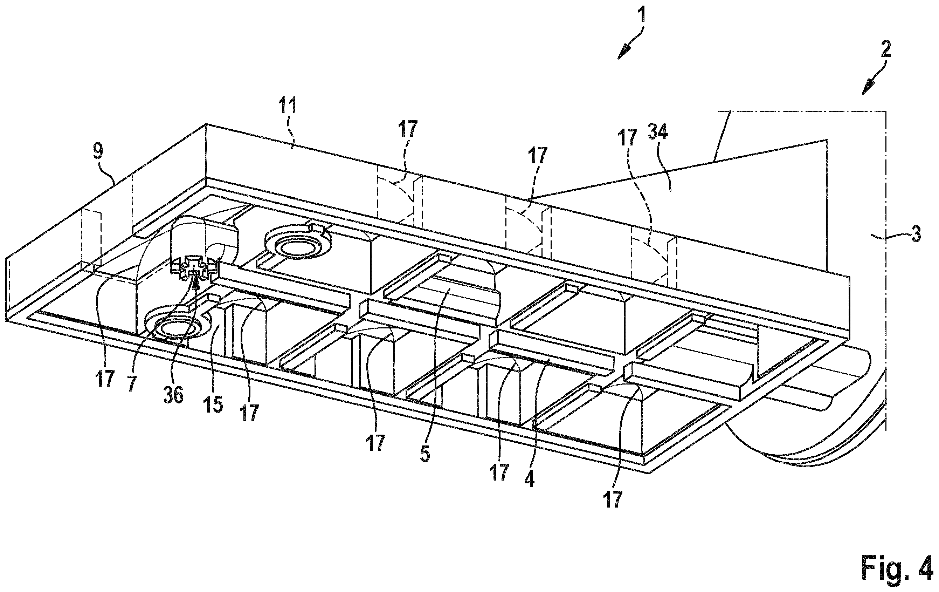

Gemäß dem Ausführungsbeispiel der Figur 4 ist es ebenfalls denkbar, die Gitterstruktur im Wesentlichen allein durch das Heizelement 11 zu bilden. Ebenso ist es denkbar, dass das Filterelement 6 beziehungsweise das Filtergewebe 15 an dem Entnahmeteil 4 und/oder dem Heizelement 11 eng anliegt, wie in Figur 4 dargestellt. Bevorzugt sind auch dabei über zumindest einigen der Öffnungen 16 entsprechende Wölbungen 17 ausgebildet.

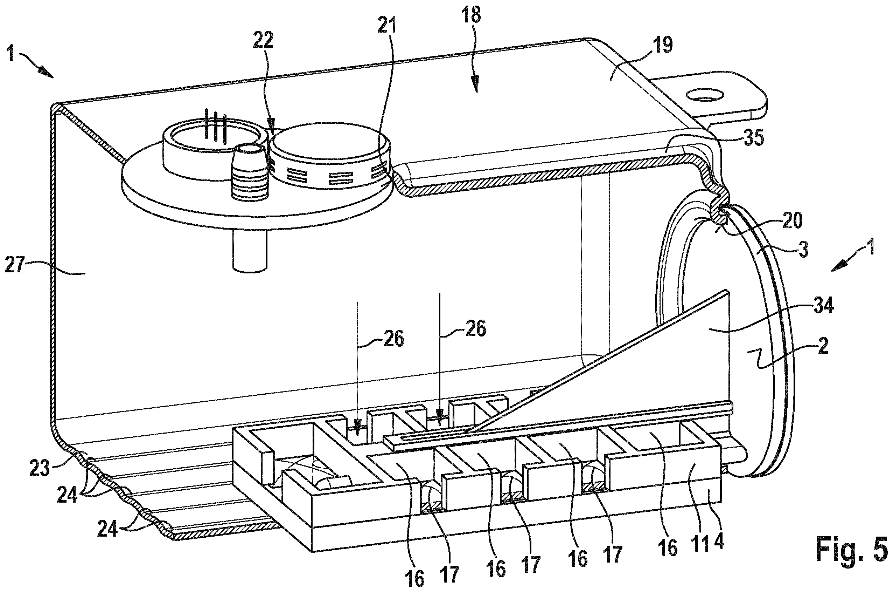

Figur 5 veranschaulicht die Anordnung des Flüssigkeitsentnahmemoduls 1 in einem Flüssigkeitstank 18. Der Flüssigkeitstank 18 umfasst eine Wandung 19, die an einer Seite eine erste Tanköffnung 20 und an der Oberseite eine zweite Tanköffnung 21 aufweist. Die Öffnung 21 ist durch eine darin eingesetzte Entlüftungseinheit 22 verschlossen, auf die an dieser Stelle nicht näher eingegangen werden soll.

Die Tanköffnung 20 ist von dem Flanschteil 3 des Flüssigkeitsentnahmemoduls 1 verschlossen. Durch die Ausbildung des Flüssigkeitsentnahmemoduls 1 erstreckt sich durch den seitlichen Einbau in den Flüssigkeitstank 18 das Entnahmeteil 4 im Wesentlichen parallel zum dem Tankboden 23, der mit wellenförmigen Schmutzfallen 24 versehen ist. Die Entnahmeöffnung 7 ist somit dem Tankboden 23 zugewandt. Bevorzugt liegt das Entnahmeteil 4 mit seiner Unterseite 6 auf dem Tankboden bereichsweise auf. Vorzugsweise weist dabei das Entnahmeteil an seiner Unterseite 6, wie in Figuren 1 und 2 dargestellt, mehrere Aussparungen 25 auf, von denen hier nur einige mit Bezugszeichen versehen sind. Die Aussparungen 25 erlauben das Eindringen von Flüssigkeit in den innerhalb der Gitterstruktur befindlichen Entnahmebereich, wenn das Entnahmeteil 4 auf dem Boden 23 aufliegt, auch wenn der Boden 23 eben ausgebildet wäre. Sind die Aussparungen 25 vorgesehen, so umschließt das Filterelement 9 beziehungsweise Filtergewebe 15 vorteilhafterweise das gesamte Entnahmeteil, sodass sichergestellt wird, dass auch Flüssigkeit, die durch die Aussparungen 25 in den Entnahmebereich gelangt, gefiltert wurde. Im Wesentlichen wird die Flüssigkeit jedoch durch das an der Oberseite 10 angeordnete Filtergewebe gesaugt, wenn die Flüssigkeit über die Entnahmeöffnung 7 und den Entnahmekanal 5 aus dem Flüssigkeitstank 18 entnommen werden soll, wie durch Pfeile 26 angedeutet. Sind die Aussparungen 25 nicht vorgesehen, so wird gewährleistet, dass die Flüssigkeit im Wesentlichen durch die Öffnungen 16 in den Entnahmebereich strömt.

Die Wölbungen 17 sind somit entgegen der Entnahme-Strömungsrichtung gewölbt ausgebildet. Dies hat den Vorteil, dass zum einen die Filterfläche vergrößert wird, und darüber hinaus ein Festsetzen von Schmutzpartikeln auf dem Filter 9 erschwert wird. Darüber hinaus wirken die Wölbungen 17 durch die elastische Ausführung des Filterelements 9 so, dass bei erfolgender Entnahme beziehungsweise Absaugung von Flüssigkeit aus dem Tank 18 diese nachgeben können und sich beispielsweise derart verformen, dass sie in entgegengesetzter Richtung gewölbt werden, wodurch verhindert wird, dass Luft in das Filterinnere beziehungsweise in den Entnahmebereich gelangt. Die Wölbungen 17 bilden somit eine Art Reserve, die ein weiteres Absaugen von Flüssigkeit insbesondere bei niedrigem Füllstand des Flüssigkeitstanks erlaubt, ohne dass Luft angesaugt wird. Insbesondere bei niedrigen Temperaturen, die zu einem Frieren der in dem Flüssigkeitstank 18 befindlichen Flüssigkeit führen können, ist dies vorteilhaft.

Während in den vorteilhaften Ausführungsbeispielen Wölbungen lediglich an der Oberseite 10 des Entnahmeteils 4 dargestellt sind, ist in einer bevorzugten Ausführungsform vorgesehen, dass ein oder mehrere Wölbungen auch an der Unterseite 6 des Entnahmeteils 4 vorgesehen sind, die ebenfalls entgegen der Entnahme-Strömungsrichtung beziehungsweise in Richtung des Tankbodens 23 gewölbt sind, wodurch weitere Flüssigkeit vom Tankboden 23 zur Absaugung bereitgestellt wird. Zusätzlich ist denkbar, dass das Filtergewebe leichte Wellen, Falten oder ähnliche Formen aufweist, die zur Flächenvergrößerung und zur Zugentlastung, insbesondere beim Einfrieren der Flüssigkeit im Tank dienen.

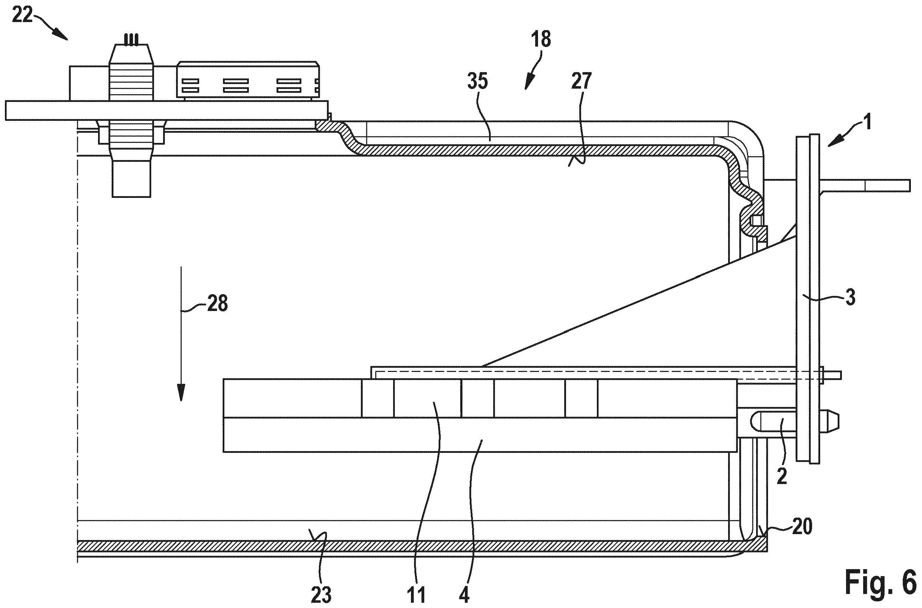

Das Entnahmeteil 4 ist an einem Randbereich des Flanschteils 3 angeordnet, sodass die Mittelachsen des Entnahmeteils 4 und des Flanschteils 3 versetzt zueinander angeordnet sind. Hierdurch wird eine günstige Positionierung des Entnahmeteils 4 und damit der Entnahmeöffnung 7 an dem Tankboden 23 ermöglicht. Figur 6 zeigt hierzu einen Montageschritt zur Montage des Flüssigkeitstanks 18 mit dem Flüssigkeitsentnahmemodul 1. Die bevorzugt kreisförmige Tanköffnung 20 weist einen Durchmesser auf, der es erlaubt, das Entnahmeteil 4 zusammen mit dem Heizelement 11 in den Tankinnenraum 27 einzubringen. Sobald das Entnahmeteil 4 sich in dem Tankinnenraum 27 befindet, wird das Flüssigkeitsentnahmemodul 1 in Richtung des Tankbodens 23, wie durch einen Pfeil 28 angedeutet, verlagert, bis der Flanschteil 3 koaxial zu der Tanköffnung 20 angeordnet ist. Anschließend wird das Flüssigkeitsentnahmemodul 1 bis zum Anschlag, also bis der Flansch 3 auf der Wandung des Flüssigkeitstanks 18 anliegt, eingeschoben. Vorzugsweise wird dann das Flanschteil 3 mit der Wandung 19 des Flüssigkeitstanks 18 verschweißt oder verklebt, um eine dichte und sichere Verbindung zu gewährleisten. Prinzipiell ist es auch denkbar, die Tanköffnung 20 im Tankboden 23 vorzusehen, und das Flanschteil 3 und das Entnahmeteil 4 im Wesentlichen parallel zueinander auszurichten, sodass im eingebauten Zustand das Entnahmeteil 4 auf dem Tankboden 23 aufliegt und das Flanschteil 3 die Tanköffnung 20 in dem Tankboden 23 verschließt. Ebenfalls ist es denkbar, dass das Entnahmeteil 4 von dem Flanschteil 3 direkt gebildet wird, und sich das Heizelement sowie das Filterelement 9 über das Flanschteil 4 erstrecken. Dies ist besonders bevorzugt bei einem Einbau des Flüssigkeitsentnahmemoduls 1 in einer Tanköffnung, die im Tankboden 23 ausgebildet ist.

Alternativ zu der hier dargestellten Ausführungsform des Flüssigkeitsentnahmemoduls zur seitlichen Anordnung an dem Flüssigkeitstank 18, ist das Flüssigkeitsentnahmemodul in einer bevorzugten, hier nicht dargestellten Ausführungsform zur Anordnung an/in einer im Tankboden 23 ausgebildeten Tanköffnung ausgebildet. In diesem Fall weist auch das Entnahmeteil 4 eine kreisförmige Grundfläche auf und ist parallel zu dem Flanschteil 3 angeordnet. Besonders bevorzugt bildet das Flanschteil 3 das Entnahmeteil 4 mit.

Der Flüssigkeitstank 18 weist eine von der Tanköffnung 20 zu der Tanköffnung 21 führende Vertiefung 35 auf, in welche insbesondere eine beheizte Druckleitung der oben beschriebenen Fördereinrichtung eingelegt werden kann, die zu der Entlüftungseinheit 22 führt und erst ab dort in Richtung eines Verbrauchers. Hierdurch kann durch Wärmekavitätsbildung im vollständigen durchgefrorenen Flüssigkeitstank 18 kostengünstig verändert werden.

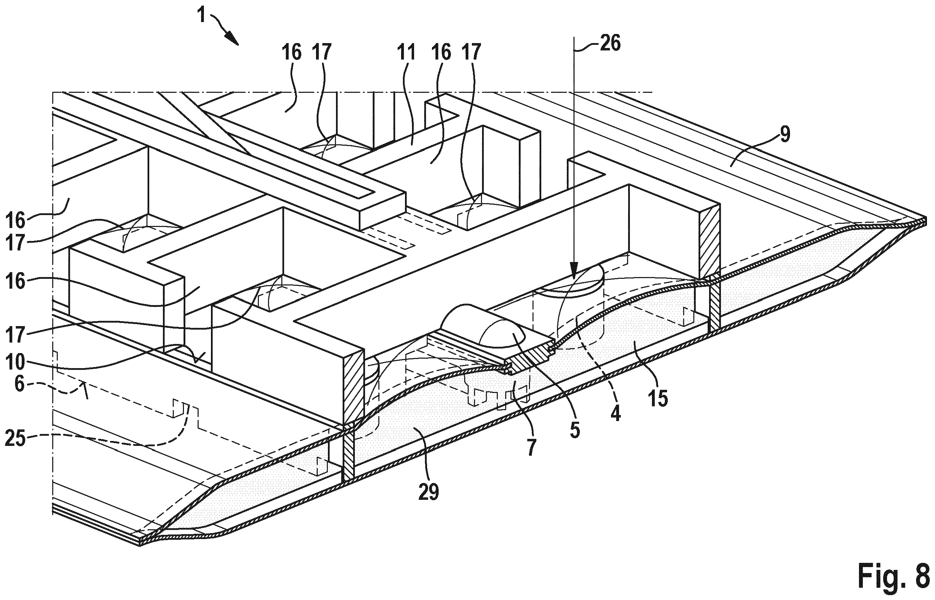

Figur 8 zeigt eine vorteilhafte Weiterbildung des Flüssigkeitsentnahmemoduls 1, bei der das das Entnahmeteil 4 umschließende Filterelement 9 einen oder mehrere Zwischenfilterelemente 29 aufweist, die vorzugsweise aus dem gleichen Filtergewebe 15 oder aus einem feineren oder groberen Filtergewebe gefertigt sind. Die Filterelemente 29 erstrecken sich bevorzugt von der Oberseite des Filters bis zu der Unterseite des Filters quer und/oder längs durch das Filterelement 9. In Figur 8 ist ein Zwischenfilterelement 29 dargestellt, dass sich quer durch das Filterelement 9 erstreckt. Derartige Zwischenfilterelemente 29 bilden somit eine zusätzliche Filterstufe.

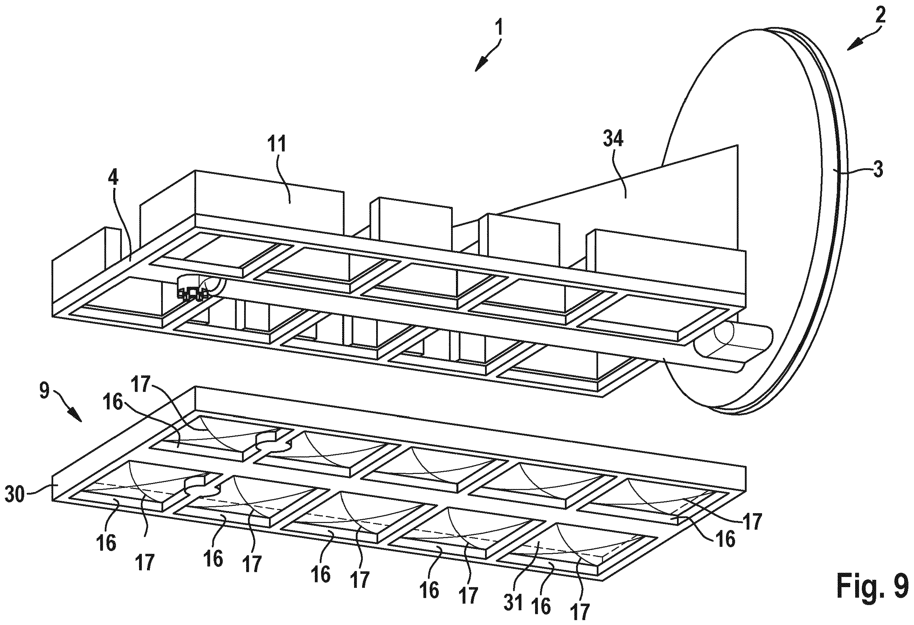

Figur 9 zeigt eine weitere Ausführungsform des Flüssigkeitsentnahmemoduls in einer perspektivischen Explosionsdarstellung. Gemäß dieser Ausführungsform wird das Filterelement 9 von einem Filterträger 30 und einem von dem Filterträger 30 gehaltenen Filtergewebe 31 gebildet. Die Struktur des Filterträgers 30 entspricht der Gitterstruktur des Heizelements 11 sowie des Entnahmeteils 4, sodass es die Öffnungen 16 weiter bildet. In dem Bereich der Öffnungen 16 ist das Filtergewebe derart ausgebildet, dass es jeweils eine weitere Wölbung 17 bildet, die entgegen der Entnahme-Strömungsrichtung ausgerichtet beziehungsweise gewölbt ist, also in Richtung des Tankbodens 23. Das in Figur 9 dargestellte Filterelement 9 und die Wölbungen 17 können somit in einer Vormontagegruppe vorgefertigt und anschließend mit dem Entnahmeteil 4 und/oder dem Heizelement 11 verbunden werden. Natürlich ist es auch denkbar, auf der Unterseite des Entnahmeteils 4 ein erstes Filterelement 9 und auf der freien Oberseite des Heizelements 11 ein entsprechendes zweites Filterelement vorzusehen, dessen Wölbungen 17 in entgegengesetzter Richtung gewölbt sind. Auch ist es denkbar, zwei Filterelemente 9, wie sie in Figur 9 dargestellt sind, hintereinander zu schalten. In einer weiteren Ausführungsform sind nur einige, oder auch nur eine der Öffnungen 16 mit gewölbten Filterelementbereichen versehen.

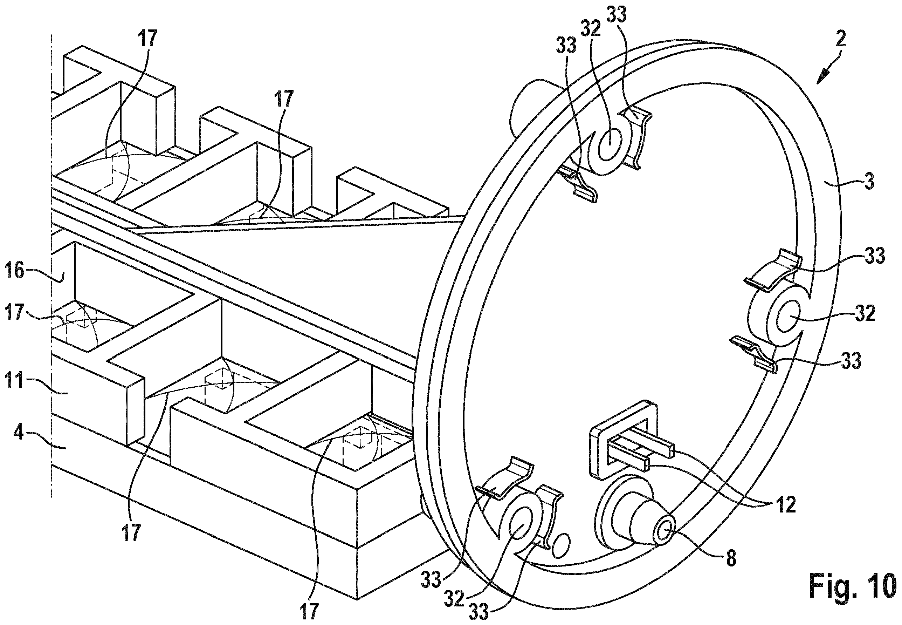

Figur 10 zeigt eine vorteilhafte Ausführungsform des Flanschteils 3, das zur Aufnahme einer Fördereinrichtung mehrere Schraubgewinde 32 aufweist. Die Schraubenlöcher 32 sind mit jeweils zwei wellenartig ausgeformten vorstehenden Halteelementen 33 versehen, die dafür sorgen, dass die Fördereinrichtung die Schrauben überwiegend axial belastet, sodass kleinere Schrauben oder eine geringere Anzahl von Schrauben verwendet werden kann. Die Schraubenlöcher 32 sind bevorzugt ohne Gewinde versehen, sodass die Schrauben direkt in das aus Kunststoff gefertigte Flanschteil 4 eingeschraubt werden.

Der Entnahmekanal 5 verläuft in einem hier nicht dargestellten Ausführungsbeispiel, bevorzugt direkt durch das Heizelement 11 und wird vorzugsweise durch dessen Kunststoffumspritzung gebildet. Dabei bildet das Heizelement 11 selbst das Entnahmeteil 4. Gemäß einer weiteren Ausführungsform wird der Entnahmekanal 3 und die Entnahmeöffnung 7 durch den Filterträger 30 oder einen anders gelagerten Filterträger gebildet.

Die Anschlussleitungen 13 sind vorzugsweise selbst als Heizleitungen ausgelegt, sodass sie insbesondere bei einer Anordnung nahe zu dem Entnahmekanal 5 diesen mitbeheizen und gegebenenfalls gefrorene Flüssigkeit auftauen. Alternativ oder zusätzlich kann mindestens eine Anschlussleitung 13 als passive Heizung des Entnahmekanals 5 ausgeführt werden. Die Wärme wird dabei aus von PTC Elementen und/oder Alukörper der Heizung über die Leitungen entlang Entnahmekanal 5 verteilt.

Durch die flächige Gitterstruktur des Heizelements 11 kann eine große Menge Flüssigkeit aufgetaut werden. Das Filterelement kann auch beim Umspritzen des Alukörpers des Heizelements 11 mitumspritzt werden. Anschließend wird dann die untere Filterseite umgelegt und zum Beispiel durch Aufschweißen mit dem Entnahmeteil 4 oder einem gesonderten Filterträger verbunden, wobei nur die Dichtheit am Randbereich des Filterträgers und dem Bereich der Auflagefläche gewährleistet werden muss. Auch ist es denkbar, das eine Baueinheit bildende Filterelement 9, wie in Figur 9 dargestellt, durch eine lösbare Verbindung an dem Entnahmeteil 4 und/oder dem Heizelement 11, beispielsweise durch Verrasten festzulegen. Die Zwischenfilterelemente dienen dabei ebenfalls als Schutz innerhalb des Filterelements 9. Die Abstände zwischen unterschiedlichen Filterlagen des Filterelements 9 können durch Abstandshalter gewährleistet werden.

Durch den Kontakt des Filterelements mit dem Heizelement 11 wird die von dem Heizelement 11 ausgehende Wärme direkt in das Filterelement 9 weitergeleitet, sodass dieses schnell aufgetaut und betriebsfähig ist. Durch eine geringe Filterhöhe beziehungsweise einem geringen Abstand zwischen unterschiedlichen Filterlagen und einem geringen Abstand zum Tankboden 23, ist die Verlagerung des Heizelements 11 nahe zu dem Tankboden 23 möglich, sodass auf das Heizelement 11 wirkende Kräfte reduziert und die dadurch mögliche Bewegung des Heizelements verringert wird. So wird das Heizelement 11 bei Temperaturen unterhalb des Gefrierpunktes schnell durchfrieren und damit durch Eis gegenüber möglicher Beschädigung durch im Eis eingeschlossene Flüssigkeit, welche sich beim Einfrieren ausdehnt, geschützt sein. Zusätzlich kann das Heizelement 11 durch eine eigene geringe Höhe die wirkenden Kräfte reduzieren. Durch definierte Auflageflächen des Flüssigkeitsentnahmemoduls 1 können definierte Druckkräfte auf den Tankboden 23 bei der Montage ausgeübt werden, wodurch Form-, Lage-, Winkel- und Ebenheitstoleranzen des Flüssigkeitsentnahmemoduls 1 und des Flüssigkeitstanks 18 im Schnittstellenbereich ausgeglichen werden. Vorzugsweise sind die Verbindungsschnittstellen zwischen den unterschiedlichen Elementen des Flüssigkeitstanks 18 und/oder des Flüssigkeitsentnahmemoduls 1 derart ausgelegt, dass für die gesamte Lebensdauer mindestens eine Auflagefläche im Kontakt zum Tankboden 23 steht. Die Verbindung zwischen dem Entnahmeteil 4 und dem Flanschteil 3 ist vorzugsweise elastisch verformbar ausgebildet, sodass Toleranzen ausgeglichen werden können und bevorzugt das Entnahmeteil 4 im eingebauten Zustand in Richtung des Tankbodens 3 gedrängt wird. Hierzu ist die zwischen dem Flanschteil 3 und dem Entnahmeteil 4 verlaufende Rippe 34 vorgesehen. Die Rippe 34 ist vorzugsweise einstückig mit dem Entnahmeteil 3 ausgebildet und liegt in einer Aussparung des Heizelements 7 ein. Die Schnittstelle zwischen der Rippe 34 und dem Flanschteil 3 ist vorzugsweise durch Verschweißen, Spiegelverschweißen oder ähnlichen Verfahren gebildet.

Darüber hinaus ist es auch denkbar, das Flüssigkeitsentnahmemodul 1 mit einem Füllstandssensor und/oder einem Rücklauf zu versehen.

Durch die Ausnutzung von Oberflächenspannungen und Kapillarwirkungen und entsprechende Auswahl von Filtermaterial-Gewebe sowie geometrischer Gestaltung des Filterelements 9 kann nicht absaugbares Flüssigkeitsvolumen im Flüssigkeitstank 18 mit ebenem Tankboden 23 ohne Pumpensumpf erheblich reduziert werden.

Die oben beschriebene vorteilhafte Ausbildung des Filterelements 9 bewirkt, dass, wenn das Filterelement 9 kurzzeitig sich nicht vollständig in Flüssigkeit befindet, die aus dem Filterinnenraum beziehungsweise dem Entnahmebereich entnommene Flüssigkeit durch Nachgeben beziehungsweise Verformen des Filtermaterials 9 beziehungsweise der Wölbungen 17 entnehmbar ist, auch wenn durch Flüssigkeitsreste, welche an der Außenseite des Filterelements 9 noch haftengeblieben sind, und/oder durch in Filter-Unebenheiten zurückgebliebenen Flüssigkeiten ein Lufteintritt in den Raumbereich verhindert wird. Vorzugsweise weist der Tankboden 23 eine Schräge in Richtung der Entnahmerichtung 7 auf.

## Patentansprüche

1. Flüssigkeitsentnahmemodul (1) zur Entnahme von Flüssigkeit aus einem Flüssigkeitstank (18), insbesondere eines Abgasnachbehandlungssystems eines Kraftfahrzeugs, umfassend einen in und/oder an dem Flüssigkeitstank (18) anordenbaren Grundkörper (2), der eine Flüssigkeitsentnahmeeinrichtung (36) mit wenigstens einer dem Tankinnenraum (27) zuordenbaren Entnahmeöffnung (7) aufweist und wenigstens ein der Entnahmeöffnung (7) zugeordnetes Filterelement (9) trägt, wobei das zumindest bereichsweise elastisch verformbare Filterelement (9) derart ausgebildet ist, dass es zumindest eine entgegen der Entnahme-Strömungsrichtung (26) ausgerichtete Wölbung (17) aufweist, wobei der Grundkörper (2) zur Einbringung des Flüssigkeitsentnahmemoduls (1) in den Flüssigkeitstank (18) ein Flanschteil (3) zum Verschließen einer Tanköffnung (20) des Flüssigkeitstanks (18) und ein in den Tankinnenraum (27) hineinragendes Entnahmeteil (4) umfasst, **dadurch gekennzeichnet, dass** das Filterelement (9) ein Filtergewebe (31) und einen Filterträger (30) umfasst, wobei der Filterträger (30) strukturgleich auf dem Entnahmeteil (4) des Grundkörpers (2) aufgebracht ist, wobei das Filterelement (9) mit dem Filterträger (30) zum Bilden der mindestens einen Wölbung (17) umspritzt, verschweißt und/oder verklemmt ist, und wobei der Filterträger (30) und/oder das Entnahmeteil (4) als Heizelement (11) ausgebildet sind.

2. Flüssigkeitsentnahmemodul nach einem der vorhergehenden Ansprüche, **dadurch gekennzeichnet, dass** das Entnahmeteil (4) eine flächige, mehrere Öffnungen (16) bildende Gitterstruktur aufweist, die insbesondere parallel zum Tankboden (23) des Flüssigkeitstanks (18) anordenbar ist.

3. Flüssigkeitsentnahmemodul nach einem der vorhergehenden Ansprüche, **dadurch gekennzeichnet, dass** sich das Filterelement (9) über das Entnahmeteil (4) erstreckt und über zumindest einer der Öffnungen (16), insbesondere über jeder der Öffnungen (16) entgegen der Entnahme-Strömungsrichtung gewölbt ist.

4. Flüssigkeitsentnahmemodul nach einem der vorhergehenden Ansprüche, **dadurch gekennzeichnet, dass** das Filterelement (9) mit dem Entnahmeteil (4) bereichsweise verschweißt ist, um die mindestens eine Wölbung (17) zu bilden.

5. Flüssigkeitsentnahmemodul nach einem der vorhergehenden Ansprüche, **dadurch gekennzeichnet, dass** das Entnahmeteil (4) außermittig, insbesondere am Randbereich des Flanschteils (3) angeordnet ist, und sich insbesondere im Wesentlichen senkrecht zu dem Flanschteil (3) erstreckt.

6. Flüssigkeitsentnahmemodul nach einem der vorhergehenden Ansprüche, **dadurch gekennzeichnet, dass** das Filterelement (9) das die Entnahmeöffnung (7) aufweisende Entnahmeteil (4) des Grundkörpers (2) umgibt.

7. Flüssigkeitsentnahmemodul nach einem der vorhergehenden Ansprüche, **dadurch gekennzeichnet, dass** Heizelement (11) kunststoffumspritzt ist.

8. Flüssigkeitstank (18) für ein Fahrzeug, insbesondere für ein Abgasnachbehandlungssystem eines Kraftfahrzeugs, mit wenigstens einer Wandung (19), die eine Tanköffnung (20) aufweist, wobei in und/oder an dem Flüssigkeitstank (18) ein Flüssigkeitsentnahmemodul (1) zur Entnahme von Flüssigkeit aus dem Flüssigkeitstank (18) die Tanköffnung (20) verschließend angeordnet ist, **gekennzeichnet durch** die Ausbildung des Flüssigkeitsentnahmemoduls (1) nach einem oder mehreren der vorhergehenden Ansprüche.

## Claims

1. Liquid removal module (1) for removing liquid from a liquid tank (18), in particular of an exhaust gas aftertreatment system of a motor vehicle, comprising a main body (2) which can be arranged in and/or on the liquid tank (18) and has a liquid removal device (36) with at least one removal opening (7) which can be associated with the tank interior (27) and bears at least one filter element (9) associated with the removal opening (7), wherein the filter element (9) which is elastically deformable at least in regions is formed such that it has at least one bulge (17) oriented opposite the removal flow direction (26), wherein for introduction of the liquid removal module (1) into the liquid tank (18), the main body (2) comprises a flange part (3) for closing a tank opening (20) of the liquid tank (18) and a removal part (4) protruding into the tank interior (27), **characterized in that** the filter element (9) comprises a filter mesh (31) and a filter carrier (30), wherein the filter carrier (30) is applied structurally matching on the removal part (4) of the main body (2), wherein the filter element (9) is coated, welded and/or clamped to the filter carrier (30) to form the at least one bulge (17), and wherein the filter carrier (30) and/or the removal part (4) are formed as a heating element (11).

2. Liquid removal module according to one of the preceding claims, **characterized in that** the removal part (4) has a planar grid structure which forms several openings (16) and can be arranged in particular parallel to the tank floor (23) of the liquid tank (18) .

3. Liquid removal module according to either of the preceding claims, **characterized in that** the filter element (9) extends over the removal part (4) and bulges opposite the removal flow direction over at least one of the openings (16), in particular over each of the openings (16).

4. Liquid removal module according to any of the preceding claims, **characterized in that** the filter element (9) is welded to the removal part (4) in regions to form the at least one bulge (17).

5. Liquid removal module according to any of the preceding claims, **characterized in that** the removal part (4) is arranged eccentrically, in particular on the edge region of the flange part (3), and in particular extends substantially perpendicular to the flange part (3).

6. Liquid removal module according to any of the preceding claims, **characterized in that** the filter element (9) surrounds the removal part (4) of the main body (2) which has the removal opening (7).

7. Liquid removal module according to any of the preceding claims, **characterized in that** heating element (11) is plastic-coated.

8. Liquid tank (18) for a vehicle, in particular for an exhaust gas aftertreatment system of a motor vehicle, having at least one wall (19) with a tank opening (20), wherein in and/or on the liquid tank (18) is arranged a liquid removal module (1) for removing liquid from the liquid tank (18), which closes the tank opening (20), **characterized by** the formation of the liquid removal module (1) according to one or more of the preceding claims.

## Revendications

1. Module de prélèvement de liquide (1) pour prélever du liquide dans un réservoir de liquide (18), en particulier d'un système de post-traitement de gaz d'échappement d'un véhicule à moteur, comprenant un corps de base (2) pouvant être agencé dans et/ou sur le réservoir de liquide (18), qui présente un système de prélèvement de liquide (36) avec au moins une ouverture de prélèvement (7) pouvant être associée à l'espace intérieur du réservoir (27) et qui porte au moins un élément de filtre (9) associé à l'ouverture de prélèvement (7), dans lequel l'élément de filtre (9) élastiquement déformable au moins localement est configuré de telle manière qu'il présente au moins un bombage (17) orienté à l'encontre de la direction d'écoulement du prélèvement (26), dans lequel le corps de base (2) comprend pour introduire le module de prélèvement de liquide (1) dans le réservoir de liquide (18) une partie de bride (3) destinée à fermer une ouverture de réservoir (20) du réservoir de liquide (18) et une partie de prélèvement (4) pénétrant dans l'espace intérieur du réservoir (27), **caractérisé en ce que** l'élément de filtre (9) comprend un treillis de filtre (31) et un support de filtre (30), dans lequel le support de filtre (30) est posé avec la même structure sur la partie de prélèvement (4) du corps de base (2), dans lequel l'élément de filtre (9) est enrobé, soudé et/ou serré avec le support de filtre (30) pour former ledit au moins un bombage (17), et dans lequel le support de filtre (30) et/ou la partie de prélèvement (4) sont réalisés en forme d'élément chauffant (11).

2. Module de prélèvement de liquide selon l'une quelconque des revendications précédentes, **caractérisé en ce que** la partie de prélèvement (4) présente une structure de grille plate, formant plusieurs ouvertures (16), qui peut être agencée en particulier parallèlement au fond de réservoir (23) du réservoir de liquide (18).

3. Module de prélèvement de liquide selon l'une quelconque des revendications précédentes, **caractérisé en ce que** l'élément de filtre (9) s'étend au-dessus de la partie de prélèvement (4) et est bombé à l'encontre de la direction d'écoulement de prélèvement au-dessus d'au moins une des ouvertures (16), en particulier au-dessus de chacune des ouvertures (16).

4. Module de prélèvement de liquide selon l'une quelconque des revendications précédentes, **caractérisé en ce que** l'élément de filtre (9) est soudé localement à la partie de prélèvement (4), afin de former ledit au moins un bombage (17).

5. Module de prélèvement de liquide selon l'une quelconque des revendications précédentes, **caractérisé en ce que** la partie de prélèvement (4) est disposée en position décentrée, en particulier dans la région de bord de la partie de bride (3), et s'étend en particulier essentiellement perpendiculairement à la partie de bride (3).

6. Module de prélèvement de liquide selon l'une quelconque des revendications précédentes, **caractérisé en ce que** l'élément de filtre (9) entoure la partie de prélèvement (4) du corps de base (2) présentant l'ouverture de prélèvement (7) .

7. Module de prélèvement de liquide selon l'une quelconque des revendications précédentes, **caractérisé en ce que** l'élément chauffant (11) est enrobé de matière plastique.

8. Réservoir de liquide (18) pour un véhicule, en particulier pour un système de post-traitement des gaz d'échappement d'un véhicule à moteur, avec au moins une paroi (19), qui présente une ouverture de réservoir (20), dans lequel un module de prélèvement de liquide (1) pour prélever du liquide dans le réservoir de liquide (18) est agencé dans et/ou sur le réservoir de liquide (18) en fermant l'ouverture de réservoir (20), **caractérisé en ce que** le module de prélèvement de liquide (1) est réalisé selon une ou plusieurs des revendications précédentes.
